Europäisches Patentamt

European Patent Office

Office européen des brevets

(19)

(11) Veröffentlichungsnummer: **0 052 344**
A2

(12) **EUROPÄISCHE PATENTANMELDUNG**

(21) Anmeldenummer: 81109635.3

(22) Anmeldetag: 11.11.81

(51) Int. Cl.³: **H 02 K 7/14**
**H 02 K 7/18**

(30) Priorität: 11.11.80 DE 8030107 U

(43) Veröffentlichungstag der Anmeldung:
26.05.82 Patentblatt 82/21

(84) Benannte Vertragsstaaten:
AT BE CH DE FR GB IT LI

(71) Anmelder: Magnet-Motor GmbH Gesellschaft für
magnetmotorische Technik
Moosstrasse 14
D-8130 Starnberg(DE)

(72) Erfinder: Heidelberg, Götz, Dipl.-Phys.
Am Hügel 16
D-8136 Percha(DE)

(74) Vertreter: Patentanwälte Dr. Elisabeth Jung Dr. Jürgen
Schirdewahn
Dr. Gerhard Schmitt-Nilson Dr. Gerhard B. Hagen
Dipl.-Ing. Peter Hirsch Clemensstrasse 30
D-8000 München 40(DE)

(54) Rotations-Antrieb oder -Generator.

(57) Rotations-Antrieb oder -Generator, mit einem mit Stromleitern (10) versehenen Stator (2) und mit einem mit Dauermagneten (30) versehenen Läufer (32), die mit einem Ringspaltabstand zwischen sich angeordnet sind. Ein bei der leistungsnehmenden oder leistungsgebenden Vorrichtung bereits vorhandenes, drehbar gelagertes Teil dient als Trag- teil für ringförmig verteilte Dauermagnete (30), wodurch der Läufer (32) gebildet wird. Durch Anordnung der Dauermag- nete (30) an einer Radfelge (56) läßt sich ein Radmotor bilden.

FIG. 5

EP 0 052 344 A2

Rotations-Antrieb oder -Generator
_____

Die Erfindung bezieht sich auf einen Rotations-Antrieb oder
-Generator gemäß Oberbegriff des Anspruchs 1.

Der Erfindung liegt die Aufgabe zugrunde, einen derartigen
Rotations-Antrieb oder -Generator mit äußerst geringem Bauaufwand zu schaffen.

Zur Lösung dieser Aufgabe ist der Rotations-Antrieb oder
-Generator erfindungsgemäß so ausgebildet, wie im kennzeichnenden Teil des Anspruchs 1 angegeben.

Bei vielen leistungsnehmenden bzw. anzutreibenden Vorrichtungen
ist bereits ein tragfähig gelagertes, drehbares Teil vorhanden,
beispielsweise das Rad eines Fahrzeugs, die Antriebswelle
einer Schiffsschraube, eine Getriebewelle, eine Maschinenwelle oder dergleichen; bei vielen leistungsgebenden bzw.
antreibenden Vorrichtungen ist bereits ein tragfähig gelagertes, drehbares Teil vorhanden, beispielsweise Kurbelwelle bzw.
Schwungrad eines Verbrennungsmotors, Maschinenwelle, Getriebewelle oder dergleichen. Die Erfindung geht von der Erkenntnis
aus, daß man ein bereits tragfähig drehbar gelagertes Teil
durch Einsatz als Tragteil von ringförmig verteilten Dauermagneten
zum Läufer eines Antriebs oder Generators machen kann. Man
braucht dann nur noch gegenüber diesem zum Läufer gemachten
Teil einen Stator anzuordnen, um einen kompletten Antrieb oder
Generator vor sich zu haben. Somit ist dann der Antrieb oder
der Generator keine gesonderte Maschine mit Gehäuse und Lagerung für sich, sondern man hat der bereits vorhandenen,
leistungsnehmenden oder leistungsgebenden Vorrichtung auf einfachste Weise einen elektrischen Antrieb oder Generator zugefügt.

- 2 -

Obwohl im Anspruch 1 von "Stromleitern" und "Dauermagneten"
gesprochen ist, soll der untere Grenzfall von nur einem
Stromleiter oder nur einem Dauermagnet mit umfaßt sein.

Die Ausdrucksweise "Antrieb oder Generator" soll nicht bedeuten, daß ein und dasselbe Aggregat in der Lage sein muß,
diese beiden Funktionen wahlweise zu erfüllen. Es soll vielmehr zum Ausdruck gebracht werden, daß nach dem Prinzip der
Erfindung sowohl ein Antrieb bzw. Motor als auch ein Generator erstellt werden kann. Nach dem Prinzip der Erfindung
kann man allerdings auch ein Aggregat erstellen, das sowohl
als Antrieb als auch als Generator arbeiten kann.

Die verwendeten Begriffe "Stator" und "Läufer" sollen nicht
bedeuten, daß der Stator unbedingt der unbewegt bleibende
Teil des Antriebs oder des Generators und der Läufer unbedingt der sich bewegende Teil des Antriebs oder des Generators
ist. Vielmehr sind beide Möglichkeiten, also sich bewegender
Stator mit unbewegt bleibendem Läufer und unbewegt bleibender
Stator mit sich bewegendem Läufer, ausführbar, sogar die
Möglichkeit, daß sich sowohl Stator als auch Läufer mit unterschiedlicher Geschwindigkeit bewegen. Der Fall des unbewegt bleibenden Stators ist jedoch bevorzugt, da diesem
Strom zugeführt bzw. von diesem Strom abgeführt werden muß.

In den meisten Fällen sind die Stromleiter in Form von
Spulen vorgesehen.

Bei der Erfindung werden bevorzugt hochkoerzitive Dauermagnete
aus einer Legierung eines Elements aus der Gruppe der seltenen Erden, insbesondere Samarium, mit Kobalt eingesetzt. Solche Magnete erlauben es, mit vergleichsweise großen Spaltweiten zu arbeiten. Sie zeichnen sich ferner durch eine praktisch gerade
Kennlinie im vierten Quadranten aus, wodurch sie gegen Spaltweitenänderungen und Gegenfelder, beispielsweise durch Elektromagnete, relativ unempfindlich sind.

Vorzugsweise ist der erfindungsgemäße Antrieb oder Generator
selbststeuernd ausgebildet, das heißt, daß mindestens ein am
Stator vorgesehener Sensor die Relativstellung von Stator und
Läufer erfaßt und daß eine von dem Sensor gesteuerte, vorzugsweise elektronische, Schalteinrichtung bei antriebsgerechter
bzw. generatorgerechter Relativstellung von Stator und Läufer
eine elektrische Verbindung zwischen den Stromleitern und einer
Stromquelle bzw. Stromsenke herstellt. Bevorzugte Merkmale des
Aufbaus des Antriebs oder Generators gehen aus der am gleichen
Tage eingereichten europäischen Patentanmeldung mit dem Titel
"Elektromotor" (Anmelderin: Magnet-Motor GmbH ..., Anwaltsaktenzeichen Q 847 M)

hervor, deren Gesamtinhalt durch ausdrückliche Bezugnahme zum
Teil der Offenbarung der vorliegenden Anmeldung gemacht wird.
Bevorzugte Merkmale hinsichtlich des Aufbaus und insbesondere
der elektronischen Steuerung des Antriebs oder Generators gehen
weiterhin aus der am gleichen Tage eingereichten europäischen
Patentanmeldung mit dem Titel
"Linearer, elektrischer Antrieb oder Generator" (Anmelderin:
Magnet-Bahn GmbH, Anwaltsaktenzeichen Q 848M)

hervor, deren Gesamtinhalt ebenfalls durch ausdrückliche Bezugnahme zum Teil der Offenbarung der vorliegenden Anmeldung gemacht wird.

Ein nach dem Prinzip der Erfindung ausgebildeter Rotations-
Antrieb oder -Generator läßt sich vorteilhaft in vielen Fällen
dort einsetzen, wo auch bisher Elektromotoren und elektrische
Generatoren eingesetzt worden sind. Besonders geeignete Einsatzgebiete bzw. Anordnungsorte der Dauermagneten ergeben
sich aus den Ansprüchen 2 bis 5. Durch die vorzugsweise vorgesehene und vorzugsweise elektronische Selbststeuerung des
Antriebs oder Generators läßt sich eine besonders gute Regelbarkeit nach Drehzahl, Leistung, Drehsinn und dergleichen
verwirklichen.

Ganz besonders vorteilhaft läßt sich der erfindungsgemäße
Antrieb oder Generator mit einem Rad eines Kraftfahrzeugs kombinieren. Dabei ergibt sich eine konstruktiv extrem einfache,
preisgünstige und daher ganz besonders bevorzugte Konstruktion,
wenn man die Dauermagnete im Bereich der Radfelge ringförmig verteilt
anbringt. Der Stator mit den Stromleitern, dem Sensor bzw.
den Sensoren und der Schalteinrichtung bzw. den Schalteinrichtungen kann problemlos an einem geeignet gestalteten Fortsatz
des feststehenden Achsstummels, um den sich die Radfelge dreht,
vorgesehen werden. Auf diese Weise kann man einen Antrieb ohne
einen gesondert vorgesehenen Antriebsmotor mit Gehäuse, eigener
Lagerung und dergleichen verwirklichen, indem man einfach die
von der Lagerung des Rades bzw. der Radfelge her bereits vorhandenen Teile vergleichsweise geringfügig modifiziert. Die
Verwirklichung von Vielradantrieb oder Allradantrieb ist auf
einfachste Weise möglich. Weitere Ausgestaltungsmerkmale dieses
Aspekts der Erfindung ergeben sich aus der Beschreibung eines
konkreten Ausführungsbeispiels weiter unten.

Ein Durchdrehen der Antriebsräder kann man auf elektronische
Weise dadurch verhindern, daß die Schalteinrichtung eine
Einrichtung zur Begrenzung der Umfangsgeschwindigkeit des
Antriebsrades bzw. der Antriebsräder aufweist. Auf diese Weise
kann man auch bei mehreren Antriebsrädern einer Achse eine
differentialsperrenähnliche Wirkung erzielen.

Die Lenkung des Fahrzeugs kann man durch geeignete Steuerung
der Antriebe der einzelnen Antriebsräder verwirklichen, beispielsweise mindestens ein Antriebsrad auf der einen Fahrzeugseite und mindestens ein Antriebsrad auf der anderen Seite

-5-

mit unterschiedlicher Drehzahl oder gegensinnig antreiben.
Dies ist besonders vorteilhaft bei, beispielsweise geländegängigen, Fahrzeugen hohen Gewichts, wo die Lenkung des Fahrzeugs durch Verschwenken der Räder hohen konstruktiven Aufwand erfordern würde.

Es sei betont, daß die Erfindung in vielen Fällen das Vorsehen von Getrieben, Antriebswellen, Kupplungen usw. überflüssig macht, da keine direkte mechanische Verbindung zwischen Stator und Läufer besteht und da der erfindungsgemäße
Antrieb oder Generator hinsichtlich Drehmoment, Drehzahl und
dergleichen in weiten Bereichen mit vergleichsweise geringem
Aufwand gut regelbar ist.

In vielen Fällen ist es günstig, den für den Antrieb bzw.
die Antriebe benötigten Strom im Fahrzeug zu erzeugen, beispielsweise mit Hilfe eines verbrennungsmotorgetriebenen
Generators. Diesen Generator kann man ebenfalls nach den
beschriebenen Prinzipien der Erfindung aufbauen, wobei insbesondere auf die Möglichkeit des Aufbaus mit Hilfe von auf
dem Schwungrad des antreibenden Verbrennungsmotors ringförmig
verteilten Dauermagneten hingewiesen wird.

Wenn man einen erfindungsgemäßen Antrieb zusammen mit einem
von außen antreibbaren Generator als Einrichtung zum Umsetzen
von Drehzahlen bzw. Drehmomenten, also sozusagen als Getriebe,
einsetzt, kann man aus einer vorgegebenen Antriebsdrehzahl bzw.
einem vorgegebenen Antriebsdrehzahlbereich des Generators durch
die elektronische Steuerung des von dem Generator gespeisten
Antriebs eine gewünschte, abweichende Drehzahl bzw. einen
abweichenden Drehzahlbereich machen. Eine entsprechende
Transformation gilt für die Drehmomente.

- 6 -

Die Erfindung wird im folgenden anhand schematisch dargestellter Ausführungsbeispiele noch näher erläutert. Es zeigen:

Fig. 1 bis 4 grundsätzliche Konfigurationen rotatorischer Antriebe oder Generatoren;

Fig. 5 einen in ein Kraftfahrzeugrad integrierten Antrieb.

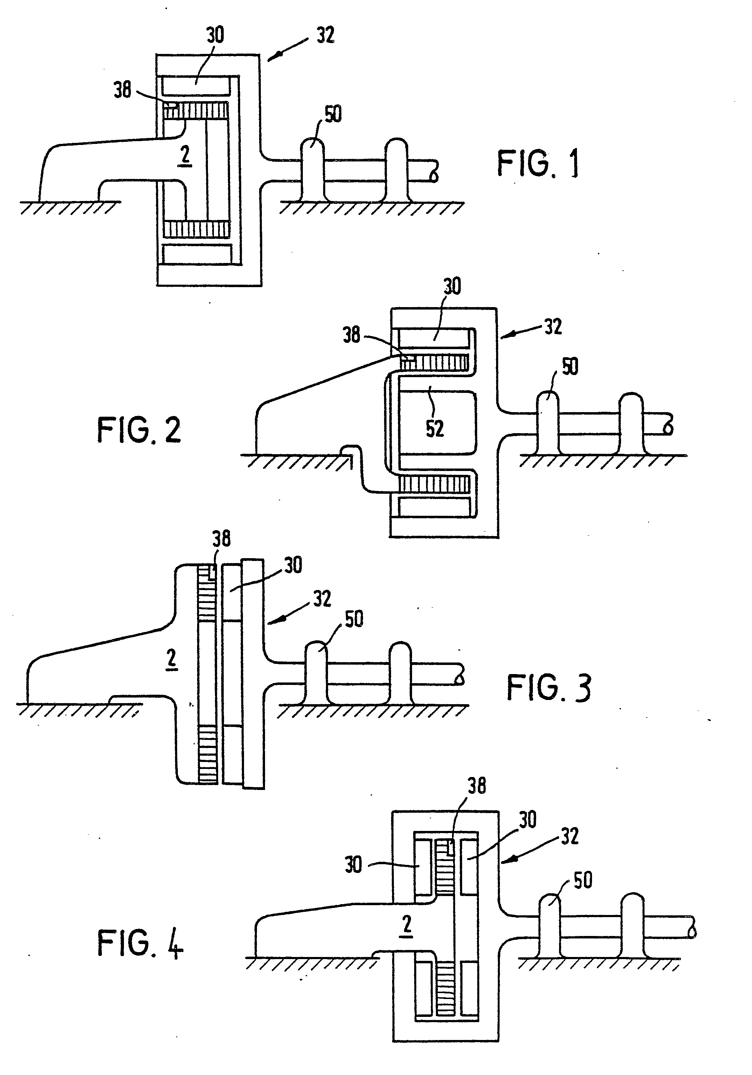

In den Fig. 1 bis 4 sind einige grundsätzliche Konfigurationen rotatorischer Antriebe oder Generatoren nach dem Prinzip der Erfindung dargestellt. Der in diesen Figuren rechte Teil des jeweiligen Antriebs oder Generators ist jeweils mit Lagern 50 drehbar gelagert und bildet den Läufer. Bei der Ausführungsform nach Fig. 1 ist der eigentliche Läuferbereich im wesentlichen becherförmig, wobei am Innenumfang des Bechers ringförmig Dauermagnete 30 mit wechselnder Polung ringförmig verteilt sind. Der Stator 2 hat die Form einer Walze, die am Außenumfang lamelliert ist, wobei die einzelnen Lamellen axial aneinandergepackt sind. Der Stator 2 trägt am Außenumfang axial verlaufende und zeichnerisch nicht dargestellte Stromleiter in geeigneter Teilung. Der Bereich des Läufers 32, an dem die Dauermagnete 30 befestigt sind, besteht aus ferro-

magnetischem Material als Rückschlußweg.    Die Stromleiter können
beispielsweise in axial verlaufende Nuten des Stators eingelegt sein.

Der Stator 2 trägt am Außenumfang eine oder ringförmig
verteilt mehrere Hallsonden 38, die mit den Dauermageten
30 zusammenwirken. Sobald hallsondenseitig festgestellt
wird, daß sich ein läuferseitiger Teil und ein statorseitiger Teil eines magnetischen Kreises oder mehrerer
magnetischer Kreise in antriebsgerechter bzw. generatorgerechter Relativlage befinden, wird der Stromleiter bzw.
die Spule oder werden die Stromleiter bzw. die Spulen dieses
Kreises bzw. dieser Kreise selbsttätig eingeschaltet.

Der Statorring kann insgesamt von einer einzigen Schalteinrichtung geschaltet sein oder in mehrere Abschnitte mit
jeweils einer Schalteinrichtung aufgeteilt sein, wobei ein
Stromleiterpaar bzw. eine Spule den unteren Grenzfall
eines Abschnittes darstellt.

Die Ausführungsform nach Fig. 2 unterscheidet sich von der Ausführungsform nach Fig. 1 dadurch, daß der radial innerhalb des Ringes der Dauermagnete 30 angeordnete Statorbereich becherförmig hineinragt und daß radial innerhalb dieses Statorbereiches ein ringförmiger Vorsprung 52 des Läufers 32 unter Einhaltung eines geringen Luftspalts zum Statorring vorgesehen ist. Auf diese Weise ist der vorher auf den Stator 2 entfallende Teil der magnetischen Kreise hauptsächlich auf den Ringvorsprung 52 verlagert, der mit gleicher Drehzahl wie die Dauermagnete 30 rotiert. Auf diese Weise lassen sich die Wirbelstromverluste reduzieren. Der radial zwischen den Dauermagneten 30 und dem Ringvorsprung 52 befindliche Statorbereich kann auch in Form von sog. Lufstromleitern bzw. Luftspulen oder in Form von Stromleitern bzw. Spulen, deren Zwischenräume unter Freilassung der am Außenumfang und am Innenumfang liegenden Leiteroberflächen mit einer ferromagnetisches Pulver enthaltenden Vergußmasse gefüllt sind, ausgebildet sein.

Die Ausführungsform nach Fig. 3 unterscheidet sich von der Ausführungsform nach Fig. 1 dadurch, daß der Läufer 32 als Scheibe ausgebildet ist und daß die Dauermagneten axial auf der den Lagern 50 abgewandten Stirnseite der Scheibe ringförmig verteilt angeordnet sind. Auch der
Stator 2 ist scheibenförmig und trägt das Lamellenpaket
und die nicht dargestellten Stromleiter auf seiner dem
Läufer 32 zugewandten Stirnseite. Die einzelnen in Umfangsrichtung verlaufenden Lamellen des Lamellenpakets
sind radial einander benachbart.

Die Ausführungsform nach Fig. 4  unterscheidet sich von
der Ausführungsform nach Fig. 3  dadurch, daß der Läufer
32 zwei am Außenumfang miteinander verbundene Scheiben
aufweist, zwischen denen sich der als Scheibe ausgebildete
Stator befindet. Auf der den Lagern 50 abgewandten Scheibe
des Läufers 32 kann entweder ein mitrotierender, magnetischer Rückschluß nach dem Prinzip der Ausführungsform
gemäß Fig.  2 vorgesehen sein, oder es kann, wie
zeichnerisch dargestellt, dort eine Reihe ringförmig
verteilter Dauermagnete 30 stirnseitig angebracht sein.
Im letzteren Fall wirkt also die Statorscheibe auf beiden
Stirnseiten mit Dauermagneten 30 zusammen, so daß sich ein
Ausgleich der axial wirkenden, magnetischen Anziehungskräfte ergibt. Die Ausführungsform gemäß Fig. 4  kann
durch Hinzufügung weiterer Statorscheiben und Läuferscheiben erweitert werden. Der Statorbereich zwischen den
beiden mit Dauermagneten 30 bestückten Läuferscheiben kann, wie bei der Ausführungsform nach Fig. 2 beschrieben, mit
Luftstromleitern bzw. Luftspulen oder vergußmassegefüllten
Leitern bzw. Spulen verwirklicht sein.

Bei den Ausführungsformen nach Fig. 1 bis 4 sind die
Mittenabstände der Stromleiter des Stators 2 und die
Mittenabstände der Dauermagneten 30, jeweils in Umfangsrichtung, zur Sicherstellung der Antriebs- bzw. Generatorfunktion aufeinander abgestimmt.

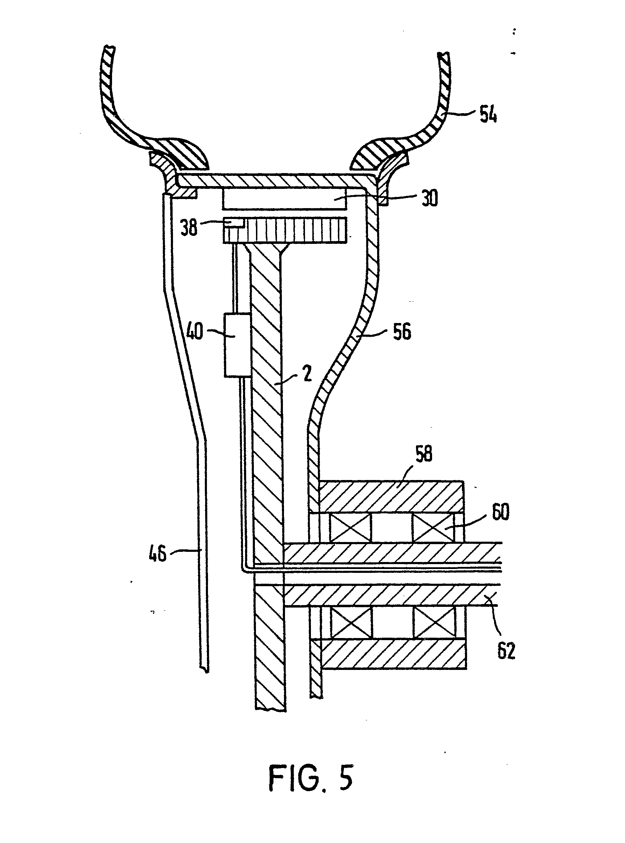

Bei der Ausführungsform nach Fig. 5 erkennt man die mit einem
Reifen 54 ausgerüstete Felge 56 eines Kraftfahrzeugs. Die Felge
56 ist an eine Radnabe 58 stirnseitig angeschraubt. Die Radnabe 58 ist mit Hilfe von zwei Wälzlagern 60 auf einem hohlen
Achsstummel 62 gelagert. Die Radnabe 58 kann auch als Bremstrommel ausgebildet sein.

Die Felge 56 hat insgesamt etwa schüsselförmige Gestalt, wobei der Rand der Schüssel auf eine Breite von einigen Zentimetern  axial parallel zur Drehachse der Felge 56 verläuft.
An diesem Rand ist über den Innenumfang ringförmig verteilt
eine Reihe von Dauermagneten 30 angeordnet. An die freie
Stirnseite des Achsstummels 62 ist ein im wesentlichen
scheibenförmiger Stator 2 angeschraubt, der sich am Außenumfang axial verbreitert und dort, wie im Zusammenhang mit der Ausführungsform nach Fig. 1 genauer beschrieben, lamelliert ist. Auf diese konstruktiv extrem einfache Weise ist ein Antrieb bzw. ein beim Bremsen des Fahrzeugs arbeitender Generator gebildet. Die elektronische Steuerung erfolgt, wie im Zusammenhang mit der Ausführungsform nach Fig. 1 genauer beschrieben. Die Schalteinrichtung 40 ist an der äußeren Stirnfläche der Statorscheibe 2 befestigt. Die Stromzuleitung erfolgt durch den hohlen Achsstummel 62. Die an sich offene, nach außen weisende Stirnseite der Felge 56 ist durch eine Radkappe 46 abgeschlossen. Durch Abnehmen der Radkappe 46 ist der gesamte Antrieb bzw. Generator, insbesondere die Schalteinrichtung 40, für Wartungs- arbeiten bequem zugänglich.

**ELISABETH JUNG** DR. PHIL., DIPL.-CHEM.
**JÜRGEN SCHIRDEWAHN** DR. RER. NAT., DIPL.-PHYS.
**GERHARD SCHMITT-NILSON** DR.-ING.
**GERHARD B. HAGEN** DR. PHIL.
**PETER HIRSCH** DIPL.-ING.

PATENTANWÄLTE
EUROPEAN PATENT ATTORNEYS

8000 MÜNCHEN 40.
P. O. BOX 40 14 68
CLEMENSSTRASSE 30
TELEFON: (089) 34 50 67
TELEGRAMM. CABLE: INVENT MÜNCHEN
TELEX: 5-29 686

**0052344**

u.Z.: Q 845 M2

(Dr.SchN/ba)                         11.November 1981

---

Magnet-Motor GmbH   Gesellschaft für magnetmotorische Technik

Moosstraße 14, 8130 Starnberg, BRD

---

"Rotations-Antrieb oder  -Generator"

---

Beanspruchte Priorität:

11.November 1980   Bundesrepublik Deutschland

Gebrauchsmusteranmeldung G 80 30 107.1

---

A n s p r ü c h e

1.      Rotations-Antrieb oder -Generator, mit einem mit Stromleitern versehenen Stator und einem mit Dauermagneten versenen Läufer, die mit einem Ringspaltabstand zwischen sich angeordnet sind, dadurch g e k e n n z e i c h n e t , daß ein
bei der leistungsnehmenden oder leistungsgebenden Vorrichtung
bereits vorhandenes, drehbar gelagertes Teil zu dessen Ausbildung als Läufer (32) als Tragteil für ringförmig verteilte
Dauermagnete (30) vorgesehen ist.

2.      Rotations-Antrieb oder -Generator nach Anspruch 1,
dadurch gekennzeichnet, daß die Dauermagnete an einer Radfelge (56), an einer Schiffsschraube, an einer Getriebewelle,
an einer Maschinenwelle oder an einem Schwungrad eines Verbrennungsmotors angeordnet sind.

3.      Rotations-Antrieb oder -Generator nach Anspruch 1 oder
2, dadurch gekennzeichnet, daß der Stator und der mit Dauermagneten versehene Läufer Teil eines auf ein Antriebsrad
oder eine Antriebswelle arbeitenden Planetengetriebes sind.

4.      Verwendung eines Rotations-Antriebs und/oder -Generators
nach einem der Ansprüche 1 bis 3 beim Antrieb von Fahrzeugen
oder Maschinen.

5.      Verwendung eines Rotations-Antriebs  nach einem der
Ansprüche 1 bis 3 zusammen mit einem antreibbaren Generator,
der vorzugsweise nach Anspruch 1 oder 2 ausgebildet ist,
als Einrichtung zum Umsetzen von Drehzahlen bzw. Drehmomenten.

FIG. 1

FIG. 2

FIG. 3

FIG. 4

FIG. 5